Europäisches Patentamt

(19) European Patent Office

Office européen des brevets

(11) EP 0 777 380 A1

(12) EUROPEAN PATENT APPLICATION

(43) Date of publication:
04.06.1997 Bulletin 1997/23

(51) Int. Cl.⁶: H04N 5/217

(21) Application number: 96118962.8

(22) Date of filing: 27.11.1996

(84) Designated Contracting States:
DE FR GB NL

(30) Priority: 29.11.1995 JP 311381/95
29.03.1996 JP 76817/96

(71) Applicant: SANYO ELECTRIC CO. LTD
Moriguchi-shi, Osaka-fu 570 (JP)

(72) Inventors:
• Higashitsutsumi, Yoshihito
Sunnyvale, CA 94087 (US)

• Takahashi, Tatsuya
Motosu-gun, Gifu-ken 501-02 (JP)
• Nakakuki, Toshio
Motosu-gun, Gifu-ken 501-02 (JP)

(74) Representative: Patentanwälte
Westphal, Buchner, Mussgnug
Neunert, Göhring
Waldstrasse 33
78048 Villingen-Schwenningen (DE)

(54) Method for calculating the smear charges in a solid state image sensing device and apparatus for reducing it

(57) A method and an apparatus for removing smear charges included within an information charge packet output are disclosed. In one aspect of the present invention, a circuit (140) for removing pieces of smear data from pieces of image data which are arranged to indicate a quantity of information charges stored in light-receiving bits in a solid state image sensing device is provided. The information charges are output from the image sensing device (120) as information charge packets. Each piece of smear data is arranged to indicate a quantity of smear charges to be mixed with each information charge packet. The circuit (140) includes a subtraction circuit (111) for subtracting pieces of smear data from pieces of image data to create pieces of image data that are free of smear data, and a line memory (112, 113) for cumulatively adding each piece of image data that is free of smear data sequentially to produce pieces of accumulated data row by row. The circuit (140) also includes a multiplier (114) for multiplying each piece of accumulated data by a coefficient, to produce pieces of smear data to be used in the subtraction circuit. In one embodiment, the circuit (140) further includes a smear coefficient generator (116) that is used for generating the coefficient in accordance with exposure data in order to determine a cycle of a transferring clock for transferring each information charge packet.

**Fig.7**

EP 0 777 380 A1

## Description

The present invention generally relates to a method of calculating the quantity of smear charges in a solid state image sensing device and a smear removing circuit. More particularly, the present invention relates to a method of calculating the quantity of smear charges which are generated during a vertical transfer of an information charge packet in a solid state image sensing device and a circuit for removing a smear component from image data using this method.

It is suitable for an image sensing apparatus using a solid state image sensing device to have exposure control means like an iris mechanism or an electronic shutter in order to maintain the optimal exposure status of the solid state image sensing device. An iris mechanism mechanically controls the amount of light entering a solid state image sensing device in accordance with the luminance of an object to be sensed (hereinafter referred to as a target object). An electronic shutter electrically controls the storage period of charges in a solid state image sensing device in accordance with the luminance of a target object.

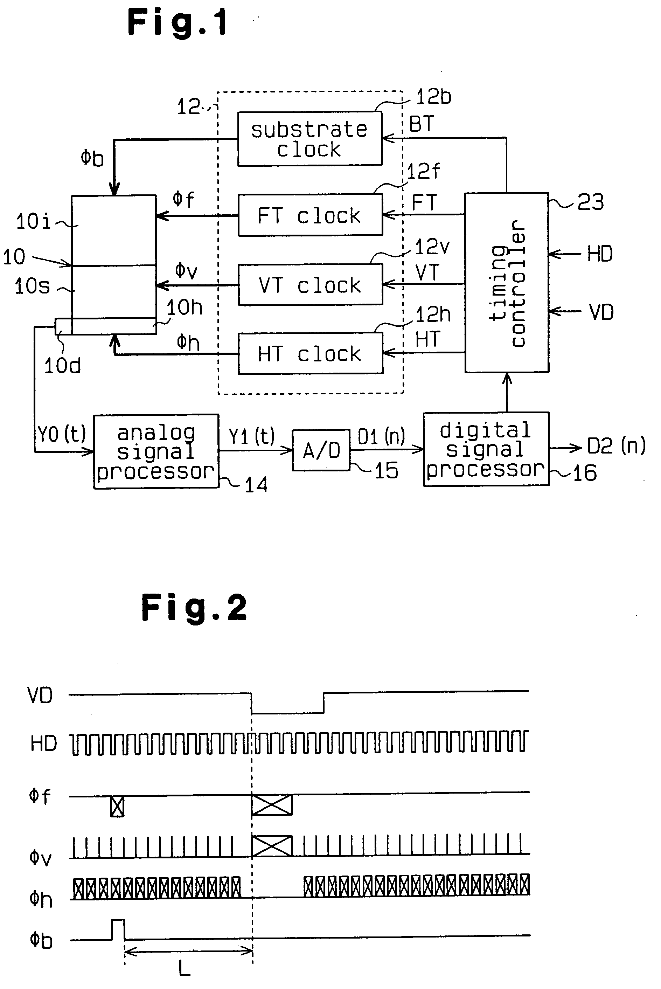

As shown in Figure 1, a Charge Coupled Device (CCD) solid state image sensing device 10 of the frame transfer type includes an image sensing section 10i, a storage section 10s, a horizontal transfer section 10h and an output section 10d. The image sensing section 10i is comprised of a plurality of shift registers connected in parallel in the horizontal direction and aligned in series in the vertical direction. Each bit of the shift registers forms a plurality of light-receiving pixels which store, e.g., accumulate, information charges that are produced in accordance with the incident light reflected from a target object. The storage section 10s is comprised of a series of shift registers associated with the shift registers of the image sensing section 10i. The number of bits of each shift register of the storage section 10s is set to match with the number of bits of each shift register of the image sensing section 10i. The storage section 10s designed as described temporarily stores one screen of packets of information charges transferred from the image sensing section 10i.

The horizontal transfer section 10h is comprised of a single shift register which has a plurality of bits respectively associated with the output bits of the plurality of shift registers of the storage section 10s. The horizontal transfer section 10h receives one screen of information charge packets stored in the storage section 10s on a line by line basis, and sequentially outputs the information charges to the output section 10d. The output section 10d includes an electrically independent capacitor which receives information charge packets from the horizontal transfer section 10h pixel by pixel, and an amplifier which detects a change in the potential of the capacitor in order to produce a voltage-value signal or analog image data Y0(t).

A clock generating circuit 12 includes a frame transfer clock generator 12f, a vertical transfer clock generator 12v, a horizontal transfer clock generator 12h and a substrate clock generator 12b. A timing controller 23, which is coupled to the clock generating circuit 12, will be described with reference to Figure 2. In response to a frame transfer timing signal FT from timing controller 23 that is synchronized with the vertical scanning, the frame transfer clock generator 12v generates a frame transfer clock signal Øf that is synchronized with a vertical sync signal VD and supplies frame transfer clock signal Øf to the image sensing section 10i. The image sensing section 10i quickly transfers the information charge packets to the storage section 10s in the horizontal scan blanking period in response to the frame transfer clock signal Øf.

The vertical clock generator 12v generates a vertical transfer clock signal Øv that is synchronized with a horizontal sync signal HD in response to a vertical transfer timing signal VT from the timing controller 23 and supplies vertical transfer clock signal Øv to the storage section 10s. In response to the vertical transfer clock signal Øv, the storage section 10s receives information charge packets transferred from the image sensing section 10i and transfers one screen of information charge packets received to the horizontal transfer section 10h on a line by line basis.

The horizontal clock generator 12h generates a horizontal transfer clock signal Øh that is synchronized with the horizontal sync signal HD in response to a horizontal transfer timing signal HT from the timing controller 23, and supplies the horizontal transfer clock signal Øh to the horizontal transfer section 10h. In response to the horizontal transfer clock signal Øh, the horizontal transfer section 10h receives information charge packets transferred from the storage section 10s line by line, and sequentially transfers the information charge packets to the output section 10d. The output section 10d supplies analog image data Y0(t) as the output of the CCD 10 to an analog signal processor 14. The horizontal clock generator 12h further generates a reset clock signal Ør and supplies reset clock signal Ør to the output section 11d. In response to the reset clock signal Ør, the output section 11d discharges the stored information charge packets bit by bit in synchronization with the horizontal transfer clock Øh.

In response to a discharge timing signal BT from the timing controller 23, the substrate clock generator 12b produces a substrate clock signal Øb that holds a high (H) level for a predetermined period, and supplies the clock signal Øb to the substrate of the CCD 10. The image sensing section 10i discharges the stored information charges in response to the substrate clock signal Øb. As shown in Figure 2, therefore, the storage time for information charges in the image sensing section 10i is indicated by a period L which extends from the completion of the information-charge discharging operation by the substrate clock signal Øb to the start of the information-charge packet transfer operation by the vertical transfer clock signal Øv. Changing the timing for supplying this substrate clock signal Øb permits the storage period for information charges, or the shutter speed to be controlled. While the substrate clock Øb is holding the H level, the gate electrode clocking in the image sensing section 10i is performed by the frame transfer clock Øf in order to efficiently discharge the information charges from the image sensing section 10i.

In response to the vertical sync signal VD and the horizontal sync signal HD, the timing controller 23 produces the frame transfer timing signal FT such that the frame transfer timing signal FT is synchronized with the vertical scanning, the vertical transfer timing signal VT such that the vertical transfer timing signal VT is synchronized with the vertical scanning and horizontal scanning, and the horizontal transfer timing signal HT such that the horizontal transfer timing signal HT is synchronized with the horizontal scanning. In addition, timing controller 23 supplies the aforementioned signals to the associated generators 12f, 12v and 12h. Further, the timing controller 23 produces the discharge timing signal BT based on integral data supplied from a digital signal processor 16, which will be discussed later, and supplies this signal to the substrate clock generator 12b. When integral data representing the integral value for one screen of image data D1(n) is greater than the proper value, the discharge timing signal BT is produced at a slower timing in order to shorten the storage time L for the information charges. On the contrary, when the integral data is smaller than the proper value, the discharge timing signal BT is produced at a faster timing in order to extend the storage time L for the information charges. This can ensure that the feedback control that always holds the appropriate exposure state of the solid state image sensing device 10.

The analog signal processor 14 receives analog image data Y0(t) from the CCD 10 and performs signal processing such as Automatic Gain Control (AGC) to produce analog image data Y1(t) according to a predetermined format. The analog image data Y0(t) has a reference potential and a signal potential which are alternately repeated in a predetermined period. In the sample and hold processing, for example, the reference potential and signal potential of the analog image data Y0(t) are sampled and a difference between both potentials is acquired. In the AGC processing, the gain corresponding to one screen of sampled and held image data is adjusted in such a manner that the average level of the screen of image data falls within the proper range.

An A/D converter 15 converts the analog image data Y1(t) to digital image data D1(n) which corresponds to each light-receiving pixel of the CCD 10 in synchronism with the processing operation of the analog signal processor 14 (the output operation of the CCD 10).

The digital signal processor 16 receives the digital image data D1(n) from the A/D converter 15, performs contour enhancing or an integrating process on one screen of image data, and other processes, such as color balance control and filtering, which are applied to color image sensing, and other outputs which result in an image data D2(n). This image data D2(n) is converted by a D/A converter into an analog signal which is to be supplied to a display device, or is recorded on a recording medium.

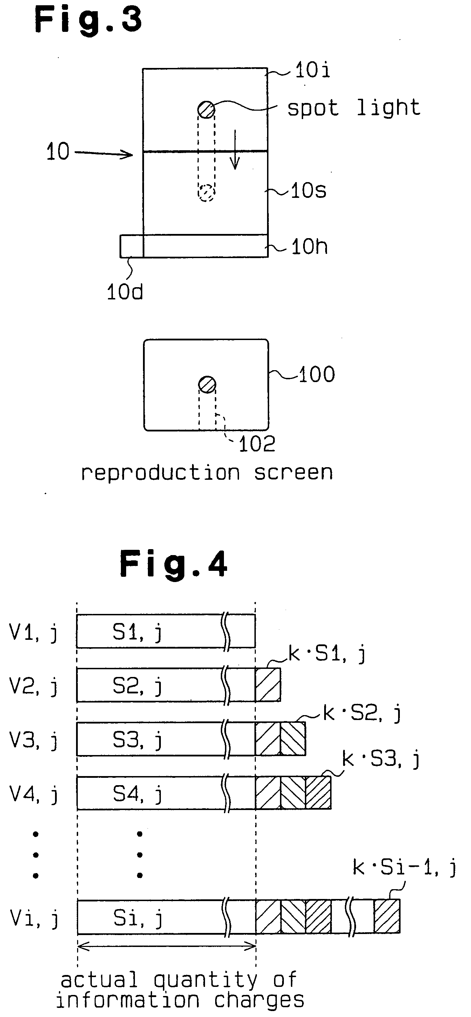

In the frame transfer type, information charges which are to be stored in a light-receiving bit of each shift register are passed through other light-receiving bits where charges are currently being generated, and are then transferred to storing bits of the storage section 10s. As a result, when an information charge packet that is to be transferred moves within other light-receiving bits, unnecessary charges or smear charges are mingled into the information charge packet, thereby generating a smear on the reproduction screen. As shown in Figure 3, for example, as the information charge packet passes through any light-receiving bit to which a bright spot light is incident, a great quantity of smear charges is mixed into that information charge packet. Consequently, a smear 102 is likely to appear below the area of a reproduction screen 100 where the spot light is to be displayed.

United States Patent No. 5,089,894 discloses a scheme for storing one line of smear information in a line memory and subtracting the smear information from image data line by line to thereby suppress the occurrence of smears. There is a time lag from the acquisition of the first line of information charge packets to the acquisition of the last line of information charge packets in the image sensing section 10i. This time lag causes a stepwise increase in the smear components line by line. Therefore, even when the smear information is subtracted from the image data line by line, the smear component originating from that time lag remains in the associated information charge packet. In particular, when a mosaic color filter is attached to the front face of the solid state image sensing device 10, the increased smear component causes an operational error in the computation of colors of image data. As a result, irregular colors are seen on the reproduction screen, significantly affecting any process on digitized image data.

The present invention relates to a method for removing smear charges included within an information charge packet output, and a smear removing apparatus which removes the smear charges.

In one aspect of the present invention, a circuit for removing pieces of smear data from pieces of image data which are arranged to indicate a quantity of information charges stored in light-receiving bits in a solid state image sensing device is provided. The information charges are output from the image sensing device as information charge packets. Each piece of smear data is arranged to indicate a quantity of smear charges to be mixed with each information charge packet. The circuit includes a subtraction circuit for subtracting pieces of smear data from pieces of image data to create pieces of image data that are free of smear data, and a line memory for cumulatively adding each piece of image data that is free of smear data sequentially to produce pieces of accumulated data row by row. The circuit also includes a multiplier for multiplying each piece of accumulated data by a coefficient, which is present in accordance with a storage time for the information charges, to produce pieces of smear data to be used in the subtraction circuit. In one embodiment, the circuit further includes a smear coefficient generator that is used for generating the coefficient in accordance with exposure data in order to determine a cycle of a transferring clock for transferring each information charge packet.

In another aspect of the present invention, a smear-removing circuit for removing a first set of pieces of smear data and a second set of pieces of smear data from pieces of image data which are arranged to indicate a quantity of information charges stored in light-receiving bits in a solid state image sensing device is provided. The information charges are output from the image sensing device as information charge packets. Each piece of smear data from the first set of pieces of smear data ("first smear data") is arranged to indicate a quantity of smear charges to be mixed with each information charge packet. Each piece of smear data form the second set of pieces of smear data ("second smear data") is arranged to indicate a quantity of charges accumulated in a saturated light-receiving bit after pieces of smear data from the first set are removed from the image data. The circuit includes a first removing circuit that is arranged to receive pieces of image data and to subtract pieces of first smear data from pieces of image data in order to produce pieces of image data that is free of the first smear data. The circuit also includes a second removing circuit, which is connected to the first removing circuit, that is arranged to remove pieces of second smear data form the image data that is free of the first smear data to produce image data that is free of both the first smear data and the second smear data.

In one embodiment, the first removing circuit includes a subtraction circuit that is used for receiving pieces of image data and subtracting pieces of first smear data from pieces of image data to produce the pieces of image data that is free of the first smear data. In such an embodiment, the first removing circuit further includes a line memory for cumulatively adding each piece of image data to produce pieces of cumulated data, a frame memory for storing pieces of image data that is free of first smear data, a detector for detecting saturated light-receiving bits that are associated with the pieces of image data that is free of first smear data, and a subtraction circuit for subtracting the pieces of second smear data from the pieces of image data that is free of the first smear data.

In still another aspect of the invention, a method for calculating a quantity of smear charges to be mixed in a plurality of information charge packets is provided. The method involves predicting the quantity of smear charges in each light-receiving bit, which stores information charge packets in a solid state image sensing device, based on a quantity of information charges stored in each light-receiving bit. The method further involves cumulatively adding the predicted quantity of smear charges by a number of light receiving bits through which the information charge packets pass, thereby calculating the quantities of smear charges to be mixed in the information charge packets which are output form the solid state image sensing device.

In one embodiment, the solid state image sensing device complies with a frame transfer type and includes an image sensing section which has a plurality of columns of light receiving bits and a vertical transfer section that is arranged to receive individual information charge packets. In such an embodiment, the solid state image sensing device may comply with an interline transfer type.

Other aspects and advantages of the invention will become apparent from the following description, taken in conjunction with the accompanying drawings, illustrating by way of example the principles of the invention.

The invention, and preferred object and advantages thereof, may best be understood by reference to the following description of the certain exemplifying embodiments together with the accompanying drawings, in which:

Figure 1 is a block diagram showing a conventional image sensing apparatus;

Figure 2 is a timing chart illustrating the operation of the image sensing apparatus in Figure 1;

Figure 3 is a diagram depicting a smear which is generated in a solid state image sensing device according to a frame transfer type;

Figure 4 is a diagram for explaining how to calculate the quantity of smear charges in a solid state image sensing device in accordance with the present invention;

Figure 5 is a plan view showing a solid state image sensing device according to a frame transfer type in accordance with the present invention;

Figure 6 is a plan view showing a solid state image sensing device according to an interline type in accordance with the present invention;

Figure 7 is a block diagram illustrating a smear removing circuit according to a first embodiment of the present invention using the scheme of calculating the quantity of smear charges of the present invention;

Figure 8 is a block diagram showing an exposure controller which supplies exposure data to the smear removing circuit in accordance with the present invention;

Figure 9 is a block diagram illustrating a smear removing circuit according to a second embodiment of the present invention using the scheme of calculating the quantity of smear charges of the present invention;

Figure 10 is a block diagram showing a saturation area detector in a second removing circuit included in the smear removing circuit in Figure 9 in accordance with the present invention; and

Figure 11 is a diagram illustrating the operation of the second removing circuit of Figure 10 in accordance with the present invention.

Scheme of Calculating Amount of Smear Charges

Figure 4 is a diagram for use in explaining how to calculate the quantity of smear charges in a solid state image sensing device according to the present invention. The quantity of output charges acquired from the individual light-receiving bits of a shift register in an image sensing section is indicated by $V_{i,j}$ (i is a row and j is a column). It is assumed here that the amounts of light that the individual light-receiving bits receive are even. $E_{i,j}(t)$ is the quantity of stored charges in a light-receiving bit per unit time in accordance with the frame transfer type. The quantity of the output charges of the light-receiving bit at the i-th row and the j-th column, $V_{i,j}$, is given by the following equation (1):

$$V_{i,j} = \int_{t1}^{t2} E_{i,j}(t)\,dt + \sum_{n=1}^{i-1} \int_{t2+(n-1)\Delta t}^{t2+n\Delta t} E_{i-n,j}(t)\,dt \qquad (1)$$

where t1 is the start time for the storage of information charges in each light-receiving bit, t2 is the end time for the storage of the information charges, and $\Delta t$ is the time required for an information charge packet to pass through one light-receiving bit. The first term on the right-hand side of equation (1) indicates the quantity of information charges to be stored in a single light-receiving bit during a predetermined storage time (t2 - t1). The second term on the right-hand side of equation (1) indicates the quantity of smear charges which are mixed into an information charge packet while the information charge packet is transferred to the storage section from the image sensing section. In the first term, the quantity of stored charges, $E_{i,j}(t)$, is integrated over an interval from time t1 to time t2. The integral value represents the quantity of information charges stored in each light-receiving bit. In the second term, the quantity of stored charges $E_{i,j}(t)$ is integrated over a time $\Delta t$. The integral value represents the quantity of charges which are mixed in an information charge packet while this information charge packet passes through one light-receiving bit. Thus, the quantity of smear charges is acquired by summing such integral values, where the summation is performed over the number of light-receiving bits present in the transfer path.

An assumption is made that there is a small time lag between t1 and t2 and a small time lag between t1 and t2 + n$\Delta$t. It is further assumed that the amount of incident light does not change. In this case, the amount of stored charges $E_{i,j}(t)$ becomes constant ($E_{i,j}$) and the quantity of output charges $V_{i,j}$ is given by the following equation (2):

$$V_{i,j} = (t2 - t1) \cdot E_{i,j} + \sum_{n=1}^{i-1} \Delta t \cdot E_{n,j} \qquad (2)$$

Further, by replacing the quantity of information charges to be stored in each light-receiving bit between t1 and t2, i.e., (t1 - t2)·$E_{i,j}$, with the actual quantity of information charges, $S_{ij}$, equation (2) may be rewritten as follows:

$$V_{i,j} = S_{i,j} + \frac{\Delta t}{t2 - t1} \cdot \sum_{n=1}^{i-1} S_{n,j} \qquad (3)$$

Therefore, the actual quantity of information charges, $S_{i,j}$, is given by the following equation (4):

$$S_{i,j} = V_{i,j} - k \cdot \sum_{n=1}^{i-1} S_{n,j} \qquad (4)$$

$$\left( k = \frac{\Delta t}{t2 - t1} \right)$$

That is, the quantity of information charges, $S_{i,j}$, is what results from the subtraction of the quantity of smear charges from the output charge quantity $V_{i,j}$ of each light-receiving bit.

When a solid state image sensing device which complies with the NTSC (National Television System Committee) system is used, the frame transfer frequency corresponds to the subcarrier signal frequency (14.32 MHz). In this case, $\Delta t$ becomes 0.28 μsec, which is equivalent to about 1/228 of one horizontal scan period (63.6 μsec). When the time for a light-receiving bit to store information charges is one horizontal scan period, therefore, 1/228 of the quantity of information charges is equivalent to the quantity of smear charges. Thus, when the storage time for information charges increases by the factor of n, the ratio of the quantity of smear charges to the quantity of information charges may be expressed as 1/n.

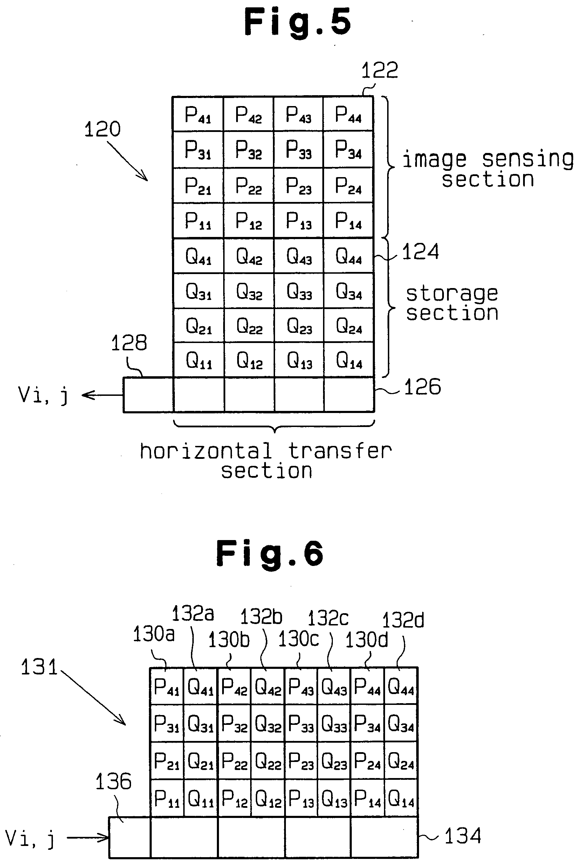

The following describes a scheme for calculating the quantity of smear charges according to the present invention. As shown in Figure 5, a solid state image sensing device 120 of the frame transfer type includes an image sensing section 122, a storage section 124, a horizontal transfer section 126, and an output section 128.

The image sensing section 122 includes four shift registers each having four light-receiving bits. The light-receiving bits P11 to P44 are arranged in a 4 x 4 matrix. The storage section 124, like the image sensing section 122, includes four shift registers each having four storing bits, The four shift registers of storage section 124 are connected in series to the respective shift registers of the image sensing section 122. Storing bits Q11 to Q44 are likewise arranged in a 4 x 4 matrix. The horizontal transfer section 126 has a single shift register of four bits, which receive output charges from the respective four shift registers of the storage section 124 and transfer those charges to the output section 128, which is located horizontally with respect to the storage section 124.

After a predetermined storage period passes, the information charges stored in the individual light-receiving bits P11-P44 pass the respective shift registers, and are transferred to the associated storing bits Q11-Q44 of the storage section 124, frame by frame. Specifically, the information charge packets stored in the first row of light-receiving bits P11-P14 are transferred into the shielded storage section 124 immediately after the frame transfer has started. Therefore, smear charges are hardly included in the output charges $V_{1,1}$ to $V_{1,4}$ acquired from the first row of storing bits Q11-Q14. In other words, the quantity of the output charges $V_{1,1}$ to $V_{1,4}$ substantially coincides with the quantity of information charges $S_{1,1}$ to $S_{1,4}$ stored in the first row of light-receiving bits P11-P14.

The information charge packets stored in the second row of light-receiving bits P21-P24 pass the first row of light-receiving bits P11-P14 and are transferred to the second row of storing bits Q21-Q24 in the storage section 124. Therefore, the quantity of output charges $V_{2,1}$ to $V_{2,4}$ acquired from the second row of storing bits Q21-Q24 substantially matches the quantity of information charges $S_{2,1}$ to $S_{2,4}$ stored in the second row of light-receiving bits P21-P24 plus the quantity of smear charges generated in the first row of light-receiving hits P11-P14.

One method for determining the quantity of smear charges will now be described. The quantity of smear charges is acquired by multiplying the quantity of information charges $S_{1,1}$ to $S_{1,4}$, which are stored in the first row of light-receiving bits P11-P14 within a predetermined storage time, t2 - t1, by the ratio of the passing time $\Delta t$ to the storage time, $k = \Delta t/(t2 - t1)$. When the quantity of information charges is $S_{1,1}$ to $S_{1,4}$, for example, the quantity of smear charges generated in those light-receiving bits P11-P14 during $\Delta t$ becomes $k \cdot S_{1,1}$ to $k \cdot S_{1,4}$. In some cases, the quantity of stored charges $E_{i,j}(t)$ per unit time during the period from the start of the storage of information charges to the completion of frame transfer is constant as is the case for the aforementioned equation (2). This calculation of the quantity of smear charges can be applied to all the rows of light-receiving bits P11-P44.

The information charge packets stored in the third row of light-receiving bits P31-P34 pass the second and first rows of light-receiving bits P21-P24 and P11-P14 and are transferred to the third row of storing bits Q31-Q34 in the storage section 124. Therefore, the quantity of output charges $V_{3,1}$ to $V_{3,4}$ acquired from the third row of storing bits Q31-Q34 substantially matches the quantity of information charges $S_{3,1}$ to $S_{3,4}$ stored in the third row of light-receiving bits P31-P34 plus the quantity of smear charges generated in the second and first rows of light-receiving bits P21-P24 and P11-P14.

The quantity of smear charges which are generated in the second row of light-receiving bits P21-P24 may be expressed as $k \cdot S_{2,1}$ to $k \cdot S_{2,4}$ using the above-discussed calculation method. Further, the quantity of smear charges which are generated in the first row of light-receiving bits P11-P14 becomes $k \cdot S_{1,1}$ to $k \cdot S_{1,4}$. Adding the quantities of smear charges generated in the second row and the first row yields the quantity of smear charges $k \cdot (S_{2,1} + S_{1,1})$ to $k \cdot (S_{1,1} + S_{1,4})$ included in the quantity of output charges $V_{3,1}$ to $V_{3,4}$. In addition, at the time of acquiring charges from the second row of storing bits Q21-Q24, the quantity of smear charges for the second row, $k \cdot S_{2,1}$ to $k \cdot S_{2,4}$, is added to the previously computed quantity of smear charges for the first row $k \cdot S_{1,1}$ to $k \cdot S_{1,4}$.

The information charge packets stored in the fourth row of light-receiving bits P41-P44 pass the third, second and first rows of light-receiving bits P31-P34, P21-P24 and P11-P14 and are transferred to the fourth row of storing bits Q41-Q44 in the storage section 124. Thus, the quantity of output charges $V_{4,1}$ to $V_{4,4}$ acquired from the fourth row of storing bits Q41-Q44 substantially coincides with the sum of the quantity of information charges $S_{4,1}$ to $S_{4,4}$ stored in the fourth row of light-receiving bits P41-P44 and the quantity of smear charges generated in the third, second and first rows of light-receiving bits P31-P34, P21-P24 and P11-P14.

The quantities of smear charges which are generated in the third to first rows of light-receiving bits P31-P34, P21-P24 and P11-P14 respectively become $k \cdot S_{3,1}$ to $k \cdot S_{3,4}$, $k \cdot S_{2,1}$ to $k \cdot S_{2,4}$, and $k \cdot S_{1,1}$ to $k \cdot S_{1,4}$ from the above-discussed calculation method. Adding all of the above quantities of smear charges yields the quantity of smear charges $k \cdot (S_{3,1} + S_{2,1} + S_{1,1})$ to $k \cdot (S_{3,4} + S_{2,4} + S_{1,4})$ which is included in the quantity of output charge $V_{4,1}$ to $V_{4,4}$. Further, at the time of acquiring charges from the third row of storing bits Q31-Q34, the quantity of smear charges for the third row $k \cdot S_{3,1}$ to $k \cdot S_{3,4}$ is added to the previously computed quantity of smear charges for the second and first rows, namely $k \cdot (S_{2,1} + S_{1,1})$ to $k \cdot (S_{2,4} + S_{1,4})$.

When the number of light-receiving bits is four or greater, the quantities of smear charges for the individual rows can be sequentially computed by adding the quantity of smear charges for one bit to the previously computed quantity of smear charges every time a row of charges is transferred. For example, the quantity of smear charges in the output charges $V_{i,j}$ in the i-th storing bit may be obtained by adding the quantity of smear charges which are generated in the (i-1)-th light-receiving bit to the quantity of smear charges in the output charges $V_{i-1,j}$ in the (i-1)-th storing bit. This sequential addition of the quantity of smear charges provides a simple way of calculating the quantity of smear charges for all the rows. This calculation is based on the transfer of information charge packets, stored in the individual light-receiving bits arranged in the same row, to the storage section 124 through the same transfer path. That is, the quantities of smear charges to be generated in the individual light-receiving bits in the same transfer path are equal to one another over a relatively short period of time.

As mentioned above, the quantity of smear charges is calculated while a row of information charge packets is transferred in the vertical direction. The time from the storage of information charges in each light-receiving bit to the transfer thereof is relatively short, and a change in the intensity of light to be irradiated to each light-receiving bit is relatively small. It is therefore possible to nearly accurately estimate the quantity of smear charges in the individual light-receiving bits from the quantity of information charges in the individual light-receiving bits for a predetermined storage period. The quantity of smear charges included in the quantity of output charges which are to be finally acquired is readily computed by accumulatively adding the estimated value over the number of light-receiving bits present in the transfer path of information charge packets.

The above-described method of calculating the quantity of smear charges may be applied to the interline type as well as the frame transfer type. As shown in Figure 6, individual storage sections 132a to 132d in a solid state image sensing device 131 of an interline type are respectively arranged adjacent to image sensing sections 130a to 130d.

In the interline type, the quantity of the output charges $V_{i,j}$ of the light-receiving bit at the i-th row and the j-th column is given by the following equation (5):

$$V_{i,j} = \int_{t1}^{t2} E_{i,j}(t)\,dt + \sum_{n=1}^{i-1} \int_{t2+(n-1)\Delta t}^{t2+n\Delta t} a \cdot E_{i-n,j}(t)\,dt \quad (5)$$

where "a" is a coefficient which represents the ratio of charges leaking into the shift register from each light-receiving bit and is set to less than one.

In the interline type, information charge packets stored in the individual light-receiving bits are directly transferred to a shielded adjoining shift register. In the interline type, unlike the frame transfer type, smear charges are not mixed in the information charges in each light-receiving bit. The adjoining shift register temporarily retains the information charge packets which have been transferred from the individual light-receiving bits. During this packet holding period, some new information charges stored in the light-receiving bits leak and are mixed as smear charges into the information charge packets retained in the adjoining shift register. The degree of mixture of the smear charges is proportional to the intensity of light to be incident to the individual light-receiving bits, such that the proportionality coefficient is given by "a". The value of this coefficient a varies in accordance with the structure of the solid state image sensing device and the wavelength of light which is to be incident to the light-receiving bits. Therefore, the optimal value for the coefficient a may be determined by monitoring the output of the solid state image sensing device that is obtained in the actual image sensing.

The first term on the right-hand side of above equation (5) expresses the quantity of information charges to be stored in a single light-receiving bit in a predetermined storage time (t2 - t1). The second term on the right-hand side of equation (5) shows the quantity of smear charges to be mixed into an information charge packet while information charges are transferred to the adjoining shift register and are vertically shifted in that shift register. In the first term, the quantity of stored charges, $E_{i,j}(t)$, in a light-receiving bit per unit time is integrated over an interval from time t1 to time t2. The result of the computation in the first term thus represents the quantity of information charges stored in each light-receiving bit. In the second term, a value obtained by integrating the amount of stored charges $E_{i,j}(t)$ per unit time over $\Delta t$ is multiplied by the aforementioned coefficient a. The result of the computation in the second term therefore shows the quantity of charges which, while an information charge packet passes through a single storing bit, leak from a light-receiving bit which adjoins to that storing bit. Thus, the quantity of smear charges may be acquired by cumulatively adding the quantity of leaking charges over the number of light-receiving bits present in the transfer path.

In one embodiment, it may be assumed that in the interline type, as was the case in the frame transfer type, the amount of stored charges $E_{i,j}(t)$ between t1 and t2 and between t1 and t2 + $n\Delta t$ is constant. As such, the quantity of information charges in each light-receiving bit, $S_{i,j}$, may be given by the following equation (6).

$$S_{i,j} = V_{i,j} - ak \cdot \sum_{n=1}^{i-1} S_{n,j} \quad (6)$$

$$\left( k = \frac{\Delta t}{t2 - t1} \right)$$

with reference to the above equation, a method of calculating the quantity of smear charges in the interline type will be described. As shown in Figure 6, the solid state image sensing device comprises four columns of image sensing sections 130a to 130d each having four light-receiving bits, four columns of shift registers 132a to 132d each having four storing bits, a horizontal transfer section 134 and an output section 136. The light-receiving bits P11 to P44 are arranged in a 4 x 4 matrix and are each comprised of a photodiode. The shift registers 132a-132d are respectively located adjacent to the image sensing sections 130a-130d such that four light-receiving bits are associated with four storing bits. In other words, the image sensing sections 130a-130d are arranged in parallel to the associated shift registers 132a-132d such that the individual rows of light-receiving bits P11-P44 are respectively associated with the individual rows of storing bits Q11-Q44. The horizontal transfer section 134 is comprised of a single shift register having four transfer bits which receive the output charges from the four shift registers 132a-132d and transfer the charges to the output section 136 located horizontal to the horizontal transfer section 134.

After a predetermined storage period passes, the information charges stored in the individual light-receiving bits P11-P44 are transferred to the associated storing bits Q11-Q44 where individual light-receiving bits P11-P44 are temporarily retained.

The information charge packets stored in the first row of storing bits Q11-Q14 are transferred quickly to the horizontal transfer section 134. Therefore, smear charges are hardly included in the output charges $V_{1,1}$ to $V_{1,4}$ acquired from the first row of storing bits Q11-Q14. Accordingly, the quantity of the output charges $V_{1,1}$ to $V_{1,4}$ for the first row substantially coincides with the quantity of information charges $S_{1,1}$ to $S_{1,4}$ stored in the first row of light-receiving bits P11-P14.

The information charge packets stored in the second row of storing bits Q21-Q24 pass the storing bits Q11-Q14 adjoining the first row of light-receiving bits P11-P14 and are transferred to the horizontal transfer section 134. Therefore, the quantity of output charges $V_{2,1}$ to $V_{2,4}$ acquired from the second row of storing bits Q21-Q24 substantially matches with the sum of the quantity of information charges $S_{2,1}$ to $S_{2,4}$ transferred from the second row of light-receiving bits P21-P24, and the quantity of smear charges leaking from the first row of light-receiving bits P11-P14.

The quantity of smear charges which are mixed into information charge packets by passing the first row of storing bits Q11-Q14 may be determined as follows. The quantity of smear charges is acquired by multiplying the quantity of information charges $S_{1,1}$ to $S_{1,4}$, which are stored in the first row of light-receiving bits P11-P14 within a predetermined storage time (t2 - t1), by the ratio k of the passing time $\Delta t$ to the storage time and the charge-leak coefficient a. Assuming that the quantity of information charges in the first row of light-receiving bits P11-P14 is $S_{1,1}$ to $S_{1,4}$, the quantity of charges which are generated in the first row of light-receiving bits P11-P14 during $\Delta t$ becomes $S_{1,1} \cdot \Delta t/(t2 - t1)$ to $S_{1,4} \cdot \Delta t/(t2 - t1)$. A value obtained by multiplying this charge quantity by the coefficient "a" becomes the quantity of smear charges. This calculation of the quantity of smear charges can be applied to all the rows of light-receiving bits P11-P44.

The information charge packets stored in the third row of storing bits Q31-Q34 pass through the storing bits Q21-Q24 and Q11-Q14, respectively, which adjoin the second and first rows of light-receiving bits P21-P24 and P11-P14, and are transferred to the horizontal transfer section 134. Thus, the quantity of output charges $V_{3,1}$ to $V_{3,4}$ acquired from the third row of storing bits Q31-Q34 substantially matches the sum of the quantity of information charges $S_{3,1}$ to $S_{3,4}$ transferred from the third row of light-receiving bits P31-P34 and the quantity of smear charges leaking from the second and first rows of light-receiving bits P21-P24 and P11-P14.

While information charge packets pass through the second row of storing bits Q21-Q24, the quantity of smear charges may be expressed by $ak \cdot S_{2,1}$ to $ak \cdot S_{2,4}$ from the above-described computation. Further, while information charge packets pass through the first row of storing bits Q11-Q14, the quantity of smear charges may be shown by $ak \cdot S_{1,1}$ to $ak \cdot S_{1,4}$ from the above-described computation. The value obtained by adding those charge quantities, $ak \cdot (S_{2,1} + S_{1,1})$ to $ak \cdot (S_{2,4} + S_{1,1})$, becomes the quantity of smear charges included in the quantity of the output charges $V_{3,1}$ to $V_{3,4}$ for the third row. In addition, the quantity of smear charges for the second row, $ak \cdot S_{2,1}$ to $ak \cdot S_{2,4}$, is added to the previously computed quantity of smear charges for the first row $ak \cdot S_{1,1}$ to $ak \cdot S_{1,4}$.

The information charge packets stored in the fourth row of storing bits Q41-Q44 pass the third, second and first rows of storing bits Q31-Q34, Q21-Q24 and Q11-Q14, and are transferred to the horizontal transfer section 134. Thus, the quantity of output charges $V_{4,1}$ to $V_{4,4}$ acquired from the fourth row of storing bits Q41-Q44 substantially coincides with the sum of the quantity of information charges $S_{4,1}$ to $S_{4,4}$ transferred from the fourth row of light-receiving bits P41-P44, and the quantity of smear charges leaking from the third, second and first rows of light-receiving bits P31-P34, P21-P24, and P11-P14.

While information charge packets pass through the individual storing bits Q31-Q34, the quantities of smear charges Q21-Q24 and Q11-Q14 are respectively indicated by $ak \cdot S_{3,1}$ to $ak \cdot S_{3,4}$, $ak \cdot S_{2,1}$ to $ak \cdot S_{2,4}$ and $ak \cdot S_{1,1}$ to $ak \cdot S_{1,4}$ from the above-described computation. The value obtained by adding all of those charge quantities, $ak \cdot (S_{3,1} + S_{2,1} + S_{1,1})$ to $ak \cdot (S_{3,4} + S_{2,4} + S_{1,4})$, becomes the quantity of smear charges included in the quantity of the output charges $V_{4,1}$ to $V_{4,4}$ for the fourth row. In addition, the quantity of smear charges for the third row, $ak \cdot S_{3,1}$ to $ak \cdot S_{3,4}$, is added to the previously computed quantity of smear charges for the second and first rows $ak \cdot (S_{2,1} + S_{1,1})$ to $ak \cdot (S_{2,4} + S_{1,4})$.

When the number of light-receiving bits is four or greater, the quantities of smear charges for all the rows can be readily computed by adding the quantity of smear charges for one bit to the previously computed quantity of smear charges every time an information charge packet is transferred row by row, as done in the frame transfer type.

## Smear Removing Circuit (First Embodiment)

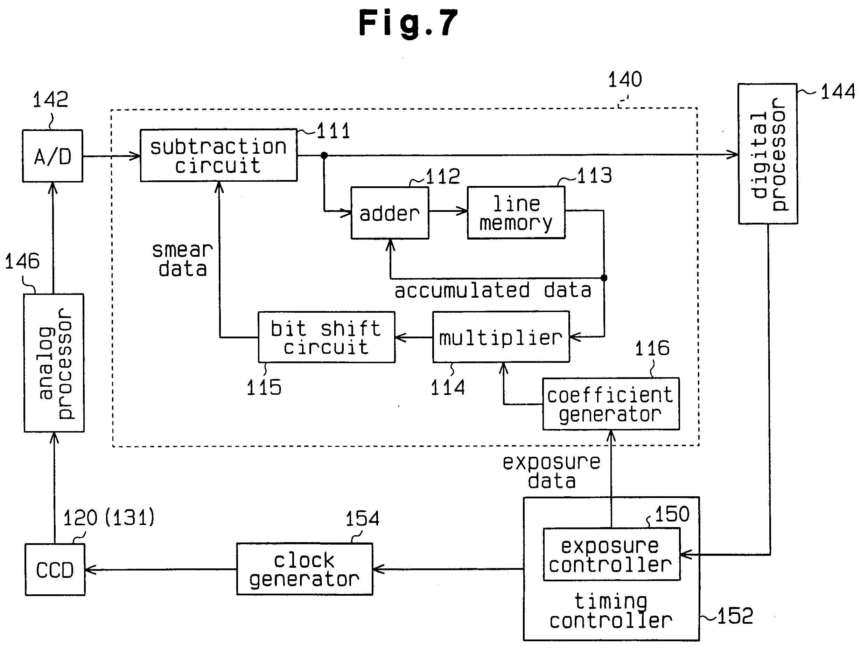

A smear removing circuit, which uses the above-described method of calculating the quantity of smear charges will be discussed below in accordance with a first embodiment of the present invention. As shown in Figure 7, a smear removing circuit 140 is connected between an A/D converter 142 and a digital processor 144. The A/D converter 142 converts analog image data, supplied from an analog signal processor 146 connected to a Charge Couple Device (CCD) solid state image sensing device 120, to digital image data and supplies the digital image data to the smear removing circuit 140. That is, digital image data is treated as the output charge quantity $V_{i,j}$.

The smear removing circuit 140 includes a subtraction circuit 111, an adder 112, a line memory 113, a multiplier 114, a bit shift circuit 115, and a coefficient generator 116. The subtraction circuit 111 subtracts plural pieces of smear data, supplied from the bit shift circuit 115 (to be discussed later), respectively from plural pieces of digital image data for a predetermined row, which are continuously supplied row by row from the A/D converter 142. The subtraction circuit 111 supplies the subtraction result, or the smear-component eliminated digital image data, for a predetermined row to the digital processor 144.

The adder 112 adds plural pieces of smear-component free image data, supplied from the subtraction circuit 111, and plural pieces of accumulated data read from the line memory 113 (which will be discussed later), and supplies the added data to the line memory 113. The line memory 113 stores the added data from the adder 112 line by line. The line memory 113 is reset every time the storage of added data corresponding to one screen of image data is completed. Therefore, the combination of the adder 112 and the line memory 113 allows plural pieces of smear-component free image data from the first row to a predetermined row to be accumulatively added for each column, and also allows plural pieces of accumulated data to be stored.

The multiplier 114 multiplies plural pieces of accumulated data, read from the line memory 113, by coefficient data which has been determined according to exposure data, thereby yielding plural pieces of smear data. Each piece of smear data indicates a smear component accumulated up to a predetermined row for each column. The bit shift circuit 115 shifts each piece of smear data from the multiplier 114 toward lower significant bits in order for digit matching between each smear component and associated image data from which that smear component is to be subtracted.

To compute the actual quantity of smears from each piece of accumulated data stored in the line memory 113, each piece of accumulated data should be multiplied by a coefficient of data that is equal to or less than one. However, the multiplication of a coefficient of data of one or less causes an error to be likely to occur in the computation result. In order to reduce such a computational error, therefore, a multiplier coefficient is set to $2^n$ times the coefficient by which each piece of accumulated data is to be multiplied according to the described embodiment. In other words, the multiplier 114 multiplies each piece of accumulated data by the $2^n$-multiplier coefficient to produce smear data. The bit shift circuit 115 multiplies each piece of smear data supplied from the multiplier 114 by $1/2^n$ in order to compute the actual smear data.

The coefficient generator 116 generates coefficient data according to the exposure data, which is supplied from an exposure controller 150 (to be described later) and represents the exposure status of the CCD solid state image sensing device 120. The exposure controller 150 supplies this coefficient data to the multiplier 114.

As will be apparent from the above, the smear removing circuit 140 performs an operation equivalent to equation (4) or equation (6), which will be discussed in more detail below. Image data from which the smear component has been removed by the subtraction circuit 111 is cumulatively added by the adder 112. The multiplier 114 multiplies the accumulated data by a predetermined coefficient in order to predict the quantity of smear charges (smear data) for each column. Then, the subtraction circuit 111 subtracts smear data from the smear-component which contains image data in order to yield smear-component free image data. In other words, the smear component, which is mixed in an information charge packet at the time of vertical transfer thereof, can be eliminated from that information charge packet through using this computation. This computation is based on the fact that digital image data supplied to the subtraction circuit 111 from the A/D converter 142 corresponds to the quantity of the output charges $V_{i,j}$ which are acquired from the CCD solid state image sensing device 120.

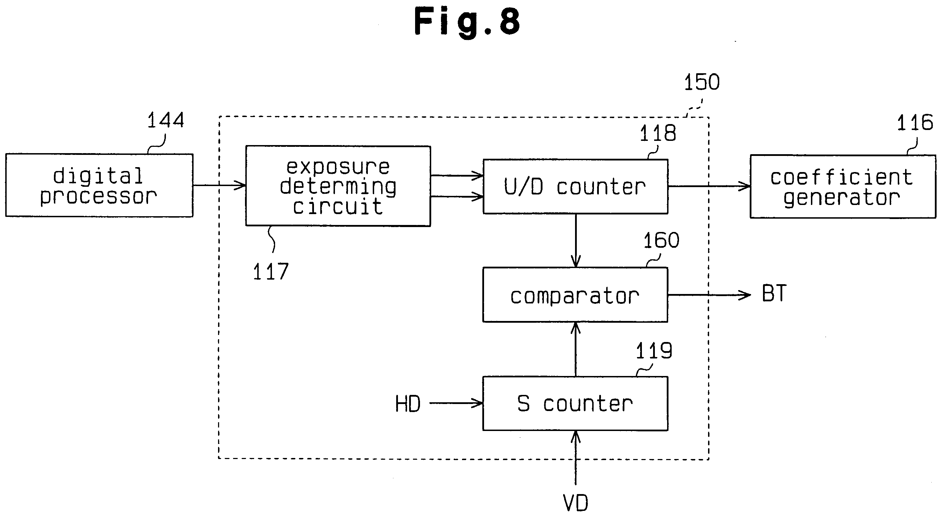

As shown in Figure 8, the exposure controller 150, which is included in a timing controller 152, sets the light receiving time for one screen of the CCD solid state image sensing device 120. The exposure controller 150 includes an exposure determining circuit 117, an up/down counter 118, a step counter 119, and a comparator 160.

The exposure determining circuit 117 receives the integral value supplied from the digital processor 114 and determines if the integral value lies within the proper range for every given vertical scan period. This integral value is the result of integrating digital image data for each screen by the digital processor 114. The exposure determining circuit 117 issues an exposure suppressing instruction when the integral value is greater than the proper range, and issues an exposure increasing instruction when the integral value is smaller than the proper range.

The up/down counter 118 counts up in accordance with the exposure suppressing instruction from the exposure determining circuit 117, and counts down in accordance with the exposure increasing instruction. The up/down counter 118 also holds the exposure period of the CCD solid state image sensing device 120, or the charge discharging timing, as a horizontal scan number. The up/down counter 118 supplies the retained horizontal scan number as exposure data to the coefficient generator 116. In the image sensing apparatus of the NTSC standard, for instance, the up/down counter 118 counts up or counts down in the range of "1" to "262", and supplies one value within the range as exposure data to the coefficient generator 116. The same exposure data is held for at least for one vertical scan period. In one vertical scan period, therefore, the same coefficient data is set.

In order to count the horizontal scan number in each vertical scan period, the step counter 119 is reset in response to a vertical sync signal VD and counts up in response to a horizontal sync signal HD. The comparator 160 compares the count of the step counter 119 with the count of the up/down counter 118, and supplies an H-level discharge timing signal BT to a clock generator 154 when both counts coincide with each other (see Figure 7). In accordance with this discharge timing signal BT, the exposure control of the CCD solid state image sensing device 120 is executed.

Smear Removing Circuit (Second Embodiment)

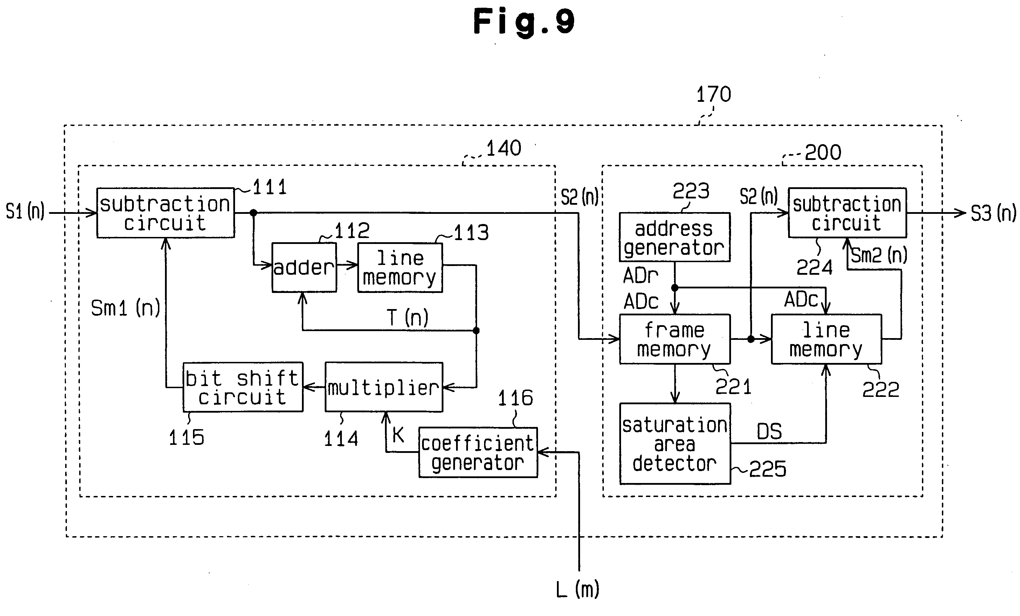

A smear removing circuit will be discussed below in accordance with a second embodiment of the present invention. As shown in Figure 9, a smear removing circuit 170 of the second embodiment comprises a first removing circuit 140 having substantially the same structure as the smear removing circuit of the first embodiment, and a second removing circuit 200. The first removing circuit 140 removes a smear component (first smear component) which originates from the time lag between vertical transfers of information charge packets in the solid state image sensing device 120. The second removing circuit 200 further removes a residual smear component (second smear component) which generally cannot be eliminated by the first removing circuit 140. The second smear component is generated when light whose amount exceeds the saturation level hits the saturated light-receiving bits. The second smear component cannot be eliminated sufficiently by the function of the smear removing circuit 140 of the first embodiment.

The subtraction circuit 111 in the first removing circuit 140 subtracts first smear data Sm1(n) from image data S1(n) which are continuously supplied row by row from the A/D converter 142, and outputs smear-component removed image data S2(n). That is, the subtraction circuit 111 executes the computation on the right-hand side of equation (4). The adder 112 adds the image data S2(n) from the subtraction circuit 111 and accumulated data T(n) read from the line memory 113, and supplies the added data to the line memory 113. The line memory 113 stores the added data from the adder 112 line by line. This line memory 113 is reset every time the storage of one screen of image data S1(n) is completed. Therefore, the adder 112 cumulatively adds image data S2(n) line by line for each column, and the line memory 113 stores one screen of accumulated data T(n). In other words, the combination of the adder 112 and the line memory 113 executes the summation ($\Sigma$) of the second term on the right-hand side of equation (4).

The multiplier 114 multiplies the accumulated data T(n), read from the line memory 113, by a coefficient of data k which has been determined according to exposure data L(m), yielding the first smear data Sm1(n). The bit shift circuit 115 shifts the first smear data Sm1(n) from the multiplier 114 toward lower significant bits in order for digit matching between the first smear data Sm1(n) and associated image data S1(n). The combination of the multiplier 114 and the bit shift circuit 115 executes the multiplication of the coefficient k of the second term on the right-hand side of the equation (4). The coefficient generator 116 generates coefficient k according to exposure data L(m) supplied from the exposure controller 150, and supplies this coefficient k to the multiplier 114.

With the above structure, every time information charge packets are vertically transferred row by row, the first removing circuit 140 cumulatively adds the quantity of smear charges mixed in the information charge packets. The accumulated value shows the first smear component which is produced while information charge packets are transferred. The first smear component may therefore be removed by subtracting the accumulated data from the image data S1(n).

The quantity of smear charges for each light-receiving bit is estimated based on the quantity of information charges (output charge quantity $V_{i,j}$) stored in each light-receiving bit. This disables the accurate estimation of the quantity of smear charges for the saturated light-receiving bits. That is, equation (1) is not satisfied. Equation (1) is not satisfied because with regard to the saturated light-receiving bits, the actual amount of incident light is not proportional to the quantity of information charges to be stored. When the light whose amount is greater than the saturation level hits any saturated light-receiving bit, therefore, the second smear charges remain in that light-receiving bit. In other words, only the first smear component is removed by the first removing circuit 140 when the light-receiving bits are not saturated, while the second smear component remains in the image data S2(n) when the light-receiving bits are saturated.

The second removing circuit 200 includes a frame memory 221, a line memory 222, an address generator 223, a subtraction circuit 224 and a saturation area detector 225. The frame memory 221 stores the image data S2(n), free of the first smear component, supplied from the subtraction circuit 111 screen by screen in association with the row position and column position of each light-receiving bit. The line memory 222 stores one row of image data S2(n) corresponding to the optically black area formed by a specific row of light-receiving bits near the last row in the image sensing section of the solid state image sensing device. One row of image data S2(n) to be stored in this line memory 222 represents the second smear component which has not been removed by the first removing circuit 140, and is supplied as the second smear data Sm2(n) to the subtraction circuit 224.

Normally, the solid state image sensing device is provided with an optically black area which is the light-shielded peripheral region of the image sensing surface. No information charges are generated or stored by the incident light in the light-receiving bits present in this optically black area. Therefore, charges which are transferred from the light-receiving bits lying in the optically black area near the last row to the first light-receiving bit on the transfer output side do not contain information charges but contain only smear charges. That is, the quantity of charges transferred from the optically black area substantially coincides with the quantity of smear charges. In other words, information charges to be transferred contain noise charges that are generated by the influence of the dark current or the like. The noise charges are however generated evenly in all the light-receiving bits. The solid state image sensing device that acquires information charges which change relative to noise is hardly affected by the noise charges. Accordingly, the total of first and second smear components can be detected by using the image data S1(n) from the vicinity of the last row. The first component of both components is removed by the first removing circuit 140.

As mentioned above, the image data S2(n) supplied from the first removing circuit 140 contains no first smear component but contains the second smear component. The image data S2(n) corresponds to the transferred output charges of the light-receiving bits near the last row. The line memory 222 stores the image data S2(n) as the second smear data Sm2(n) which is indicative of the second smear component. This second smear data Sm2(n) may be obtained by computing the average value of plural rows of image data S2(n), in which case more accurate second smear data can be obtained.

The address generator 223 supplies an address ADr that is indicative of the row position of a light-receiving bit and an address ADc which is indicative of the column position thereof to the frame memory 221, and supplies the column address ADc to the line memory 222. Based on the row and column addresses ADr and ADc, one screen of image data S2(n) is read row by row from the frame memory 221 and is supplied to the subtraction circuit 224. That is, the address generator 223 supplies the row addresses in such a way as to read the image data S2(n) corresponding to the last row to the image data S2(n) corresponding to the first row from the frame memory 221. In this manner, the image data S2(n) is read row by row from the last row from the frame memory 221 in the opposite order to the output order of information charge packets from the solid state image sensing device.

Based on the column address ADc which is supplied to the line memory 222 and the frame memory 221 simultaneously, the second smear data Sm2(n) which matches with the read image data S2(n) at the indicated column position is read from the line memory 222, and is supplied to the subtraction circuit 224.

The subtraction circuit 224 subtracts the second smear data Sm2(n) from the image data S2(n) read from the frame memory 321 to produce image data S3(n) which is free of the first and second smear components. The second smear component is generated when information charge packets in the saturated light-receiving bits are transferred. This means that the second smear component generated in each row has a uniform level. To remove the second smear component from the image data S2(n), therefore, one row of second smear data Sm2(n) can be repeatedly used.

The saturation area detector 225 detects the saturated light-receiving bits row by row based on the image data S2(n). The saturation state is determined by whether the image data S2(n) indicates the maximum value or a value close to the maximum value. When the saturated light-receiving bits are detected, the saturation area detector 225 supplies a detection pulse DS to the line memory 222 that is synchronized with the timing read for the associated row of image data S2(n) from the frame memory 221. In response to the detection pulse DS, the line memory 222 resets the second smear data Sm2(n) of the associated column to "0". This reset operation permits the subtraction circuit 224 to repeatedly perform the subtraction of the second smear data Sm2(n) until the image data S2(n) associated with saturated light-receiving bits is supplied to the line memory 222 and to substantially stop the subtraction after the image data S2(n) is supplied there. This operation is based on that fact that the second smear component is not included in light-receiving bits which are arranged in the same column as a saturated light-receiving bit and are located on the transfer output side to the saturated light-receiving bit. In other words, the subtraction circuit 224 restricts the range of image data from which the smear data Sm2(n) is subtracted in response to the detection pulse DS. The combination of the first removing circuit 140 and the second removing circuit 200 can therefore provide the image data S3(n) which is free of both the first and second smear components.

The second removing circuit 200 may be designed such that a part of the frame memory 221 becomes the line memory 222. In this case, every time image data S2(n) corresponding to the second smear data Sm2(n) is read out, the frame memory 221 may latch and supply that image data to the subtraction circuit 224. The frame memory 221 may constitute of a dual-port memory, such that image data S2(n) is read from a RAM while the second smear data Sm2(n) is simultaneously read from a serial access memory.

From the viewpoint of the circuit configuration of the second removing circuit 200, it is preferable that image data from the last row of image data S2(n) to the first row of image data should be read sequentially from the frame memory 221. Image data may be read in the reverse order from the first row of image data to the last row of image data. In this case, the subtraction circuit 224 sets one row of flags which are indicative of the permission of the subtraction column by column in response to the detection pulse DS. Based on the flags, the subtraction circuit 224 performs subtraction of the second smear data Sm2(n) with respect to the rows lying above the saturated area.

Further, it is preferable that the order of reading the image data S2(n) from the frame memory 221 be set in accordance with the circuit which receives the image data S3(n) from the second removing circuit 200. For a computer machine capable of acquiring one screen of image data S3(n) regardless of the order, for example, image data is read from the last row side. For a TV monitor which uses an NTSC standard which should acquire the image data S3(n) in a predetermined order, reading of image data starts from the first row of image data.

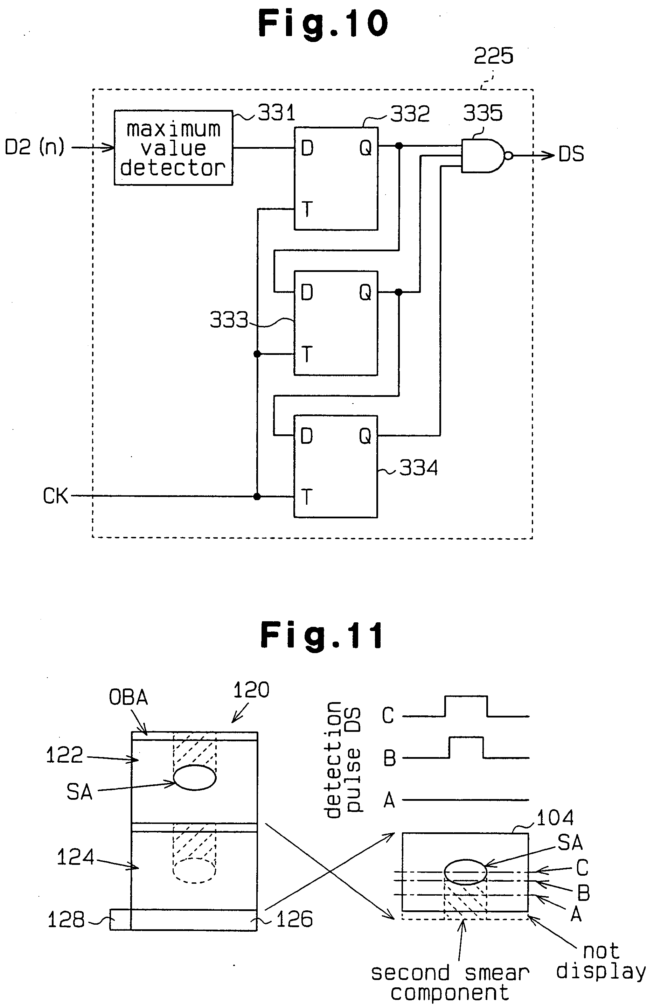

As shown in Figure 10, the saturation area detector 225 includes a maximum value detector 331, first to third flip-flops 332 to 334, and a NAND gate 335. The maximum detector 331 sequentially receives the image data S2(n) read from the frame memory 221 and determines if the data exceeds a predetermined threshold value. When it is determined that the image data exceeds the threshold value, the maximum detector supplies an H-level output signal to the first flip-flop 332. This threshold value is set close to the maximum value of image data. The first to third flip-flops 332-334, which are connected in series, are driven by a common clock CK. The first to third flip-flops 332-334 form a shift register which shifts data in response to the output signal of the maximum value detector 331 such that data is shifted in synchronization with the clock CK. The NAND gate 335 receives the output signals from the first to third flip-flops 332-334 and supplies the detection pulse DS to the line memory 222.

The image data S2(n) to be supplied to the maximum value detector 331 precedes the image data S2(n) by one data "packet" as supplied to the subtraction circuit 224. This means that when the image data S2(n) is supplied to the subtraction circuit 224, the determination result is held in the second flip-flop 333. When the image data S2(n) currently supplied to the subtraction circuit 224, and the image data S2(n+1) and S2(n-1) following and preceding the current image data S2(n) all exceed the threshold value, it is determined that the image data S2(n) is at the saturated level. Because of the computation performed by the first removing circuit 140, the image data S2(n) does not actually indicate the maximum value. In this respect, the maximum value detector 331 is designed such that the detection may be made within a certain detection range. As an alternative, determination on the maximum value may be carried out using the image data S1(n) which has not yet been subjected to the computation by the first removing circuit 140.

The saturation area detector 225 determines image data corresponding to three columns of light-receiving bits in the same row as described above. As an alternative, image data corresponding to three or more columns in a plurality of rows may be determined. When light-receiving bits of 3 rows by 3 columns are to be determined, for example, three sets of the maximum value detectors 331 and the first to third flip-flops 332-334 (all shown in Figure 10) are provided, and two line memories are connected to the third flip-flops of the first and second sets. Furthermore, the first flip-lops of the second and third sets are connected, respectively, to the two line memories. This structure allows three rows of image data D2(n) to be simultaneously determined. When the saturated areas in all the rows are simultaneously detected, the detection pulse DS is output.

The operation of the second removing circuit 200 will now be described. Since the operational principle of the first removing circuit 140, i.e., the method of calculating the quantity of smear charges has been already discussed, the description of its operation will be omitted here. Figure 11 shows the second smear component which is generated in the solid state image sensing device 120 of the frame transfer type.

When a saturated area SA is present in the image sensing section 122 of the solid state image sensing device 120, the second smear component is contained in the information charge packets which are transferred passing this saturated area SA. Specifically, with regard to the column associated with the saturated area SA, the second smear component is mixed into the information charge packets in the hatched area in Figure 11. The hatched area is located upstream of the saturated area SA in the transfer direction. The second smear component is shown below the saturated area SA on a reproduction screen 104. At the time of light reception, information charges are not generated in part of the hatched area which corresponds to the optically black area OBA. Thus, the charges which are transferred from the optically black area OBA passing the saturated area SA become only the smear charges (first and second smear components).

The quantity of the output charges $V_{i,j}$ acquired from within the saturated area becomes constant regardless of the quantity of stored charges $E_{i,j}$ in a light-receiving bit per unit time. This means that equation (1) is not satisfied. That is, the predicted value of the quantity of smear charges to be mixed when charges pass the light-receiving bit in the saturated area becomes constant. However, the physical quantity of smear charges is proportional to the quantity of stored charges $E_{i,j}$ per unit time, which results in a difference (error) between the predicted value and the actual quantity of smear charges. This error is originated from the difference between the quantity of charges generated in the saturated area over a predetermined exposure period and the quantity of charges which can be stored and transferred in each light-receiving bit. That is, this error produces the second smear component. However, there is no means for arithmetically specifying the quantity of saturated charges. As such, that the error cannot be calculated.

By obtaining the image data S2(n) corresponding to the light-receiving bits in the optically black area, the second smear component which is indicative of an error in the quantity of smear charges can be detected. Since the second smear component is generated when charges pass the same saturated area, it is constant irrespective of the row position in the same column. The image data S2(n) corresponding to the optically black area is stored as the second smear data $Sm2(n)$ in the line memory 222. In this respect, the second smear data $Sm2(n)$ is sequentially subtracted from the image data S2(n) corresponding to rows located at a lower portion of the reproduction screen. As a result, the second smear component is substantially removed in the second removing circuit 200.

A discussion will now be given of the smear removal when the solid state image sensing device 120 of the frame transfer type shown in Figure 5 is used. It may be assumed for purposes of discussion that of the light-receiving bits P11-P44, the light-receiving bits P22 and P23 at the second row and second column and at the second row and the third column are saturated, and the light-receiving bits P41-P44 in the fourth column form the optically black area.

First, the output charges $V_{1,1}$ to $V_{1,4}$ to be obtained from the first row of storing bits Q11-Q14 hardly contain smear charges because immediately after the frame transfer starts, information charge packets stored in the first row of light-receiving bits P11-P14 are supplied to the shielded storage section 124.

The quantity of the output charges $V_{2,1}$ to $V_{2,4}$ acquired from the second row of storing bits Q21-Q24 is indicated by the sum of the quantity of information charges $S_{2,1}$ to $S_{2,4}$ stored in the second row of light-receiving bits P21-P24 and the quantity of smear charges $k \cdot S_{1,1}$ to $k \cdot S_{1,4}$ [$k = \Delta t/(t2 - t1)$] which are generated in the first row of light-receiving bits P11-P14. Those smear charges all show the first smear component and are removed by the first removing circuit 140.

The quantity of the output charges $V_{3,1}$ to $V_{3,4}$ acquired from the third row of storing bits Q31-Q34 is indicated by the sum of the quantity of information charges $S_{3,1}$ to $S_{3,4}$ stored in the third row of light-receiving bits P31-P34 and the quantity of smear charges $k \cdot (S_{2,1} + S_{1,1})$ to $k \cdot (S_{1,1} + S_{1,4})$ which are generated in the second and first rows of light-receiving bits P21-P24 and P11-P14. Those smear charges all show the first smear component and are removed by the first removing circuit 140. Note that at this time the light-receiving bits P22 and P23 are saturated. The actual quantities of smear charges therefore become $k \cdot (S_{2,2} + S_{1,2}) + s_{2,2}$ and $k \cdot (S_{2,3} + S_{1,3}) + s_{2,3}$ where $s_{2,3}$ and $s_{3,3}$ indicate the second smear component and are removed by the second removing circuit 200.

The quantity of the output charges $V_{4,1}$ to $V_{4,4}$ acquired from the fourth row of storing bits Q41-Q44 is indicated by the quantity of smear charges $k \cdot (S_{3,1} + S_{2,1} + S_{1,1})$ to $k \cdot (S_{3,4} + S_{2,4} + S_{1,4})$ which are generated in the third, second and first rows of light-receiving bits P31-P34, P21-P24 and P11-P14 respectively. This is because the fourth row of light-receiving bits P41-P44 are shielded as the optically black area such that information charges are not stored in those light-receiving bits P41-P44. Those smear charges show the first smear component and are removed by the first removing circuit 140. Note that the light-receiving bits P22 and P23 at the second row and the second column and at the second row and the third column are saturated at this time. The actual quantities of smear charges therefore become $k \cdot (S_{3,2} + S_{2,2} + S_{1,2}) + s_{2,3}$ and $k \cdot (S_{3,3} + S_{2,3} + S_{1,3}) + s_{3,3}$ where $s_{2,3}$ and $s_{3,3}$ indicate the second smear component and are removed by the second removing circuit 200. That is, the second smear components $s_{2,3}$ and $s_{3,3}$ as well as the first smear components $k \cdot (S_{3,2} + S_{2,2} + S_{1,2})$ and $k \cdot S_{3,3} + S_{2,3} + S_{1,3})$ are subtracted from the quantities of the output charges $V_{2,3}$ and $V_{3,3}$ from the storing bits $Q_{2,3}$ and $Q_{3,3}$. The elimination of the first and second smear components can also be adapted to the solid state image sensing device with four or more rows of light-receiving bits by adding the quantity of smear charges bit by bit every time the target row moves to the next one, to sequentially calculate the quantity of smear charges.

A discussion will now be given regarding smear removal when the solid state image sensing device 131 of the interline type shown in Figure 6 is used. For purposes of discussion, it may be assumed that of the light-receiving bits P11-P44, the light-receiving bits P22 and P23 at the second row and second column and at the second row and the third column are saturated, and the light-receiving bits P41-P44 in the fourth column form the optically black area.

First, the output charges $V_{1,1}$ to $V_{1,4}$ hardly contain smear charges. The quantity of the output charges $V_{2,1}$ to $V_{2,4}$ is given by the sum of the quantity of information charges $S_{2,1}$ to $S_{2,4}$, and the quantity of smear charges $ak \cdot S_{1,1}$ to $ak \cdot S_{1,4}$ which leak from the first row of light-receiving bits P11-P14, where $k = \Delta t/(t2 - t1)$ and "a" is a coefficient for charge leakage to the storing bits Q11-Q14 from the light-receiving bits P11-P14. Those smear charges all show the first smear component and are removed by the first removing circuit 140.

The quantity of the output charges $V_{3,1}$ to $V_{3,4}$ is indicated by the sum of the quantity of information charges $S_{3,1}$ to $S_{3,4}$, and the quantity of smear charges $ak \cdot (S_{2,1} + S_{1,1})$ to $ak \cdot (S_{1,1} + S_{1,4})$ which leak

from the second and first rows of light-receiving bits P21-P24 and P11-P14. Those smear charges all show the first smear component and are removed by the first removing circuit 140. It should be noted that the light-receiving bits P22 and P23 are saturated at this time. The actual quantities of smear charges therefore become $ak \cdot (S_{2,2} + S_{1,2}) + s_{2,2}$ and $ak \cdot (S_{2,3} + S_{1,3}) + s_{2,3}$ where $s_{2,3}$ and $s_{3,3}$ indicate the second smear component and are removed by the second removing circuit 200.

The quantity of the output charges $V_{4,1}$ to $V_{4,4}$ is indicated by the quantity of smear charges $ak \cdot (S_{3,1} + S_{2,1} + S_{1,1})$ to $ak \cdot (S_{3,4} + S_{2,4} + S_{1,4})$ which leak from the third, second and first rows of light-receiving bits P31-P34, P21-P24 and P11-P14 respectively. This is because the fourth row of light-receiving bits P41-P44 is shielded as the optically black area such that information charges are not stored in those light-receiving bits P41-P44. Those smear charges show the first smear component and are removed by the first removing circuit 140. It should be noted that the light-receiving bits P22 and P23 are saturated at this time. The actual quantities of smear charges therefore become $ak \cdot (S_{3,2} + S_{2,2} + S_{1,2}) + s_{2,3}$ and $ak \cdot (S_{3,3} + S_{2,3} + S_{1,3}) + s_{3,3}$, where $s_{2,3}$ and $s_{3,3}$ indicate the second smear component and are removed by the second removing circuit 200. That is, the second smear components $s_{2,3}$ and $s_{3,3}$ as well as the first smear components $ak \cdot (S_{3,2} + S_{2,2} + S_{1,2})$ and $ak \cdot (S_{3,3} + S_{2,3} + S_{1,3})$ are subtracted from the quantities of the output charges $V_{2,3}$ and $V_{3,3}$.

Although only two embodiments of the present invention have been described herein, it should be apparent to those skilled in the art that the present invention may be embodied in many other specific forms. Therefore, the present examples and embodiment are to be considered as illustrative and not restrictive.

## Claims

1. A circuit for removing a plurality of pieces of smear data from a plurality of pieces of image data, each piece of image data being arranged to indicate a quantity of information charges stored in each of a plurality of light-receiving bits arranged in a matrix form in a solid state image sensing device and being continuously output as an information charge packet row by row, each piece of smear data being arranged to indicate a quantity of smear charges to be mixed in said information charge packet when said information charge packet is transferred in said solid state image sensing device, said circuit characterized by:

   a subtraction circuit (111) for receiving said plurality of pieces of image data and subtracting said plural pieces of smear data from said plurality of pieces of image data to produce a plurality of pieces of image data that are free of smear data;

   a line memory (112, 113) for cumulatively adding each piece of image data that is free of said smear data sequentially from a first row for each column upon receipt of each of said plurality of pieces of image data that is free of said smear data to produce and store a plurality of pieces of accumulated data row by row ; and

   a multiplier (114) for multiplying each piece of accumulated data by a coefficient to produce said plurality of pieces of smear data to be used in said subtraction circuit, said coefficient being preset in accordance with a storage time for said information charges in said light-receiving bits.

2. The circuit according to claim 1, characterized by a smear coefficient generator (116) for generating said coefficient in accordance with exposure data for determining a storage period for said information charges in said light-receiving bits and supplying said coefficient to said multiplier.

3. A circuit for removing a plurality of pieces of first and second smear data from a plurality of pieces of image data, each piece of image data being arranged to indicate a quantity of information charges stored in a plurality of light-receiving bits arranged in a matrix form in a solid state image sensing device and being output as an information charge packet row by row, each piece of first smear data being arranged to indicate a quantity of smear charges to be mixed in said information charge packet when said information charge packet passes at least one row of light-receiving bits and is transferred in a column direction, each piece of second smear data being arranged to indicate a quantity of charges accumulated in a saturated light-receiving bit after said piece of first smear data is removed from said piece of image data associated with said saturated light-receiving bit, said circuit characterized by:

   a first removing circuit (140) for receiving said plurality of pieces of image data and subtracting said plurality of pieces of first smear data from said plural pieces of image data to produce a plurality of pieces of image data that is free of said first smear data,

   wherein said first removing circuit (140) is capable of predicting a quantity of smear charges in each light-receiving bit based on a quantity of information charges stored therein and a ratio of a storage time for information charges to a cycle of a transferring clock for transferring said information charge packet in said column direction, cumulatively adding said predicted quantity of smear charges upon receipt of each of said plurality of pieces of image data to produce a plurality of pieces of accumulated smear data and subtracting said plurality of pieces of accumulated smear data as said plurality of pieces of first smear data from said plural pieces of image data; and

a second removing circuit (200), connected to said first removing circuit, for removing said plurality of pieces of second smear data from said plurality of pieces of image data that is free of said first smear data to thereby produce image data that is free of said first and second smear data,

wherein said second removing circuit (200) receives said plurality of pieces of image data that is free of said first smear data, retains said plurality of pieces of second smear data on a row by row basis, and further removes said retained plurality of pieces of second smear data from said plurality of pieces of image data that is free of said first smear data associated with said saturated light-receiving bits when detecting said saturated light-receiving bits in said plurality of light-receiving bits.

4. The circuit according to claim 3, wherein said first removing circuit (140) includes:

a subtraction circuit (111) for receiving said plurality of pieces of image data and subtracting said plurality of pieces of first smear data from said plurality of pieces of image data to produce said plurality of pieces of image data that is free of said first smear data; a line memory (112, 113) for cumulatively adding each piece of image data in order from a first row for each column upon receipt of each of said plurality of pieces of image data that is free of said first smear data to produce and store said plurality of pieces of cumulated image data row by row; and a multiplier (114) for multiplying each of said plurality of pieces of accumulated image data by a coefficient to produce said plurality of pieces of first smear data to be used in said subtraction circuit row by row, said coefficient being preset in accordance with a storage time for said information charges in said light-receiving bits, wherein said second removing circuit (200) includes: a frame memory (221) for storing said plurality of pieces of image data that is free of said first smear data frame by frame, said plurality of pieces of image data that is free of first smear data being associated with saturated light-receiving bits in a specific row near an optically shielded last row of said plurality of light-receiving bits that represent said plurality of pieces of second smear data; a detector (225) for detecting said saturated light-receiving bits from said plurality of pieces of image data that is free of first smear data stored in said frame memory; and a subtraction circuit (224) for receiving said plurality of pieces of second smear data and said plurality of pieces of image data that is free of said first smear data from said frame memory and subtracting said plurality of pieces of second smear data from said plurality of pieces of image data that is free of said first smear data based on a result of detection of said saturated light-receiving bits by said detector.

5. The circuit according to claim 4, wherein said first removing circuit (140) further includes a smear coefficient generator (116) for generating said coefficient in accordance with exposure data for determining a storage period for said information charges in said light-receiving bits and supplying said coefficient to said multiplier.

6. The circuit according to claim 4, wherein said second removing circuit (200) further includes a line memory (222) for storing said plurality of pieces of second smear data from said frame memory.

7. The circuit according to claim 6, wherein when said plurality of pieces of image data that is free of first smear data, associated with said plurality of light-receiving bits in said optically shielded last row, are to be read first from said frame memory (221), said subtraction circuit (224) receives said plurality of pieces of second smear data from said line memory (222) in order to sequentially perform row-by-row subtraction from said plurality of pieces of image data that is free of first smear data, associated with said plurality of light-receiving bits in said optically shielded last row until said saturated light-receiving bits are detected, and wherein said line memory (222) resets said plurality of pieces of second smear data when said saturated light-receiving bits are detected.

8. The circuit according to claim 6, wherein when said plurality of pieces of image data that is free of first smear data, associated with said plurality of light-receiving bits in a first row, are to be read first from said frame memory (221), said subtraction circuit (224) receives said plurality of pieces of second smear data from said line memory (222) after detection of said saturated light-receiving bits in order to sequentially perform row by row subtraction from said plurality of pieces of image data that is free of first smear data.

9. The circuit according to claim 6, wherein said plurality of pieces of image data that is free of said first smear data associated with a plurality of light-receiving bits in a proper number of rows near said optically shielded last row represent said plurality of pieces of second smear data, and

wherein said subtraction circuit (224) averages said plurality of pieces of second smear data in said proper number of rows to produce a plurality of pieces of averaged second smear data.

10. The circuit according to claim 7, wherein said plurality of pieces of image data that is free of said first smear data associated with a plurality of light-receiving bits in a proper number of rows near said optically shielded last row represent said plurality of pieces of second smear data, and

wherein said subtraction circuit (224) averages said plurality of pieces of second smear data in said proper number of rows to produce a plurality of pieces of averaged second smear data.

11. The circuit according to claim 8, wherein said plurality of pieces of image data that is free of said first smear data associated with a plurality of light-receiving bits in a proper number of rows near said optically shielded last row represent said plurality of pieces of second smear data, and

wherein said subtraction circuit (224) averages said plurality of pieces of second smear data in said proper number of rows to produce a plurality of pieces of averaged second smear data.

12. A method for calculating a quantity of smear charges to be mixed in a plurality of information charge packets, said plurality of information charge packets being respectively stored in a plurality of light-receiving bits arranged in a matrix form in a solid state image sensing device and being transferred row by row in a column direction in a given period to be output from said solid state image sensing device, said smear charges being mixed in each information charge packet of said plurality of information charge packets when said plurality of information charge packets are transferred passing at least one row of said plurality of light-receiving bits arranged in said matrix form, said method characterized by:

predicting said quantity of smear charges in each light-receiving bit of said plurality of light-receiving bits based on a quantity of information charges stored therein and a ratio of a storage time for said quantity of information charges to a cycle of a transferring clock for transferring said information charge packet of said plurality of information charge packets in said column direction; and

cumulatively adding said predicted quantity of smear charges by a number of said plurality of light-receiving bits through which said information charge packets pass, thereby calculating a plurality of quantities of smear charges to be mixed in said plurality of information charge packets in each row which are output from said solid state image sensing device.

13. The method according to claim 12, wherein said solid state image sensing device complies with a frame transfer type and comprises an image sensing section having a plurality of columns of light-receiving bits and a vertical transfer section, connected in series to said plurality of columns of light-receiving bits, for receiving individual information charge packets serially transferred from said plurality of columns of light-receiving bits, and wherein said smear charges are mixed in said individual information charge packets when said individual information charge packets are transferred to said vertical transfer section from said plurality of columns of light-receiving bits.

14. The method according to claim 12, wherein said solid state image sensing device complies with an interline transfer type and comprises an image sensing section having a plurality of columns of light-receiving bits and a vertical transfer section connected in parallel to said plurality of columns of light-receiving bits and having a plurality of columns of storing bits for receiving individual information charge packets transferred in parallel from said plurality of columns of light-receiving bits, and said smear charges are mixed in said individual information charge packets when said individual information charge packets are transferred to a plurality of columns of storing bits from said plurality columns of light-receiving bits and wherein each of said individual information charge packets is vertically transferred in each column of storing bits of said plurality of columns of storing bits.

# Fig.1

# Fig.2

# Fig.3

spot light

10i

10

10s

10h

10d

100

102

reproduction screen

# Fig.4

$V1, j$     $S1, j$

$k \cdot S1, j$

$V2, j$     $S2, j$

$k \cdot S2, j$

$V3, j$     $S3, j$

$k \cdot S3, j$

$V4, j$     $S4, j$

$k \cdot Si-1, j$

$Vi, j$     $Si, j$

actual quantity of
information charges

# Fig.5

# Fig.6

# Fig.7

# Fig.8

EP 0 777 380 A1

# Fig.9

# Fig.10

# Fig.11

**European Patent Office**

## EUROPEAN SEARCH REPORT

Application Number

EP 96 11 8962

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br><br>Y | EP 0 283 070 A (PHILIPS NV) 21 September 1988<br><br>* page 3, column 4, line 18 - page 6, column 10, line 49; figures 1-3 *<br>--- | 1,2,<br>12-14<br>3-11 | H04N5/217 |
| X<br><br>A | DE 38 21 705 A (LICENTIA GMBH) 11 January 1990<br><br>* the whole document *<br>--- | 1,2,12,<br>13<br>3,5 | |
| Y | US 4 490 744 A (LEVINE PETER A) 25 December 1984<br>* column 2, line 62 - column 10, line 25; figures 1-2C *<br>--- | 3-11 | |
| D,A | US 5 089 894 A (HIGASHITSUTSUMI YOSHIHITO) 18 February 1992<br>* column 4, line 1 - column 6, line 23; figures 1-9 *<br>----- | 3,4,6-11 | |
| | | | TECHNICAL FIELDS SEARCHED (Int.Cl.6)<br><br>H04N |

The present search report has been drawn up for all claims

| Place of search | Date of completion of the search | Examiner |
|---|---|---|
| THE HAGUE | 12 March 1997 | De Paepe, W |